# EUROPEAN PATENT SPECIFICATION

(11) **EP 3 545 686 B1**
(45) Date of publication and mention of the grant of the patent: **22.09.2021**
(21) Application number: 18771399.5
(22) Date of filing: 20.03.2018
(51) Int. Cl.: H04N 21/4728, H04N 5/247, H04N 5/77, H04N 5/783, H04N 5/232, G06K 9/00, G06K 9/32

(54) **METHODS AND APPARATUS FOR GENERATING VIDEO CONTENT**
VERFAHREN UND VORRICHTUNG ZUR ERZEUGUNG VON VIDEOINHALT
PROCÉDÉ ET APPAREIL DE GÉNÉRATION DE CONTENU VIDÉO

(30) Priority: 20.03.2017 IN 201741009640; 12.07.2017 IN 201741009640
(43) Date of publication of application: 02.10.2019
(73) Proprietor: Samsung Electronics Co., Ltd., Suwon-si, Gyeonggi-do 16677 (KR)
(72) Inventor: KHANDELWAL, Gaurav, Bangalore 560 037 Karnataka (IN); CHOWDHURY, Madhupa, Bangalore 560 037 Karnataka (IN); VIJAYVARGIYA, Ajay, Bangalore 560 037 Karnataka (IN); SHUKLA, Alok Shankarlal, Bangalore 560 037 Karnataka (IN)
(74) Representative: Appleyard Lees IP LLP
(86) International application number: PCT/KR2018/003200
(87) International publication number: WO 2018/174505

(56) References cited:
- EP-A1- 2 733 921
- EP-A1- 3 104 621
- CN-A- 107 786 827
- GB-A- 2 541 713
- US-A1- 2007 019 887
- US-A1- 2009 066 782
- US-A1- 2010 149 338
- US-A1- 2010 238 327
- US-A1- 2012 176 505
- US-A1- 2012 176 505
- US-A1- 2016 007 008
- US-A1- 2016 182 866
- US-A1- 2016 182 866
- US-B2- 9 357 203
- NAGAHARA H ET AL: "Dual-sensor camera for acquiring image sequences with different spatio-temporal resolution", PROCEEDINGS. IEEE CONFERENCE ON ADVANCED VIDEO AND SIGNAL BASED SURVEILLANCE, 2005. COMO, ITALY SEPT. 15-16, 2005, PISCATAWAY, NJ, USA,IEEE, PISCATAWAY, NJ, USA, 15 September 2005 (2005-09-15), pages 450-455, XP010881218, DOI: 10.1109/AVSS.2005.1577311 ISBN: 978-0-7803-9385-1
- Anonymous: "how blury the background apart from ROI -OpenCV Q&A Forum", , 3 December 2014 (2014-12-03), XP055740438, Retrieved from the Internet: URL:https://answers.opencv.org/question/51 583/how-blury-the-background-apart-from-ro i/ [retrieved on 2020-10-15]

## Description

### [Technical Field]

The disclosure relates to rendering multimedia in an electronic device. More particularly, the disclosure relates to a method of rendering multimedia in an electronic device, where at least one portion of the multimedia is displayed in slow motion.

### [Background Art]

Electronic devices, such as mobile phones, smart phones, tablets, and so on are equipped with cameras or image sensors that enable users to capture multimedia, such as images, videos, and so on.

GB 2541713A discloses processing of high frame rate video data. US 2012/176505A1 describes a method and apparatus for capturing moving pictures. US 2016/0182866A1 relates to selective high frame rate video capturing in imaging sensor subarea. EP 2733921A1 discloses an array camera, mobile terminal and methods for operating the same. US 2010/0149338 describes a method and apparatus for multi-user user-specific sense virtualization. An Internet contribution entitled "how blury the background apart from ROI" teaches how to blur the background of a set of regions of interest. EP 3104621 A1 describes de-noising and interpolation in a region of interest. US 2007/0019887 A1 describes image acquisition at high frame rate for super-resolution in a region of interest including de-blurring and de-noising processes.

The above information is presented as background information only to assist with an understanding of the disclosure. No determination has been made, and no assertion is made, as to whether any of the above might be applicable as prior art with regard to the disclosure.

### [Disclosure of Invention]

### [Solution to Problem]

Aspects of the disclosure are to address at least the above-mentioned problems and/or disadvantages and to provide at least the advantages described below. Accordingly, an aspect of the disclosure is to provide an apparatus and a method for media capture by using a plurality of image sensors, wherein at least one image sensor captures media frames in at least one region of interest (ROI) at a first frame rate to obtain a first region, a second image sensor captures full media frames at a second frame rate to obtain a second region, the first frame rate being higher than the second frame rate, and the first region is merged with the second region to output a single media file.

### [Advantageous Effects of Invention]

The embodiment of the disclosure describes a method and electronic device to capture and create a slow motion video according to claims 1 and 4.

### [Brief Description of Drawings]

The above and other aspects, features, and advantages of certain embodiments of the disclosure will be more apparent from the following description taken in conjunction with the accompanying drawings, in which:
FIG. 1 illustrates a graph depicting a variation of a frame resolution with respect to a frame rate (fps), i.e., a number of frames per second according to an embodiment of the disclosure;
FIGS. 2A, 2B, and 2C illustrate degradation of quality of an image with an increase in a frame rate according to various embodiments of the disclosure;
FIG. 3A illustrates an initial preview of a video content to be captured using an electronic device according to an embodiment of the disclosure;
FIG. 3B illustrates a selection of a region of interest (ROI) in a video content by a user according to an embodiment of the disclosure;
FIG. 3C illustrates an overview of a method of displaying a slow motion playback of video frames in a ROI according to an embodiment of the disclosure;
FIG. 4 illustrates a selection of multiple ROIs in a video according to an embodiment of the disclosure;
FIGS. 5A and 5B respectively illustrate automatic and manual selection of ROIs in a video according to various embodiments of the disclosure;
FIG. 6 illustrates display of a slow motion playback of a video, with video frames in a ROI captured at a first frame rate and full frames of the video captured at a second frame rate according to an embodiment of the disclosure;
FIG. 7A illustrates calibration of an area of a selected ROI according to an embodiment of the disclosure;
FIG. 7B illustrates a select ion of an ROI by a user according to an embodiment of the disclosure;
FIG. 7C illustrates calibration of a ROI as selected by a user according to an embodiment of the disclosure;
FIG. 8A illustrates captured frames in a ROI and full frames according to an embodiment of the disclosure;
FIG. 8B illustrates integrating captured frames in a ROI with captured full frames according to an embodiment of the disclosure;
FIG. 9 illustrates a flowchart of a method of creating and displaying a slow motion video from an initial video according to an embodiment of the disclosure;
FIG. 10 illustrates a use case scenario in which a slow motion playback of frames captured in a selected ROI in a video is displayed according to an embodiment of the disclosure;
FIGS. 11A and 11B illustrate a use case scenario of simultaneously displaying a frame of a video and a zoomed version of a frame captured in a selected ROI in the video according to various embodiments of the disclosure;
FIG. 12A illustrates an initial preview of a video to be captured using an electronic device according to an embodiment of the disclosure;
FIG. 12B illustrates a selection of a ROI in a video by a user according to an embodiment of the disclosure;
FIG. 12C illustrates display of a blurring operation performed on captured full frames of a video and a slow motion playback of frames captured in a selected ROI in a video according to an embodiment of the disclosure;
FIG. 13 illustrates removal of noise in captured frames in a selected ROI in a video while the video is being recorded according to an embodiment of the disclosure;
FIG. 14 illustrates display of zoomed slow motion playback of captured frames in a selected ROI in a video, along with a full frame display according to an embodiment of the disclosure; and
FIG. 15 illustrates various elements of an electronic device that uses a method of creating slow motion media according to an embodiment of the disclosure.

The same reference numerals are used to represent the same elements throughout the drawings.

### [Best Mode]

The invention is defined in the appended claims.

Before describing the DETAILED DESCRIPTION below, it may be advantageous to set forth definitions of certain words and phrases used throughout this document. The terms "include" and "comprise," as well as derivatives thereof, mean inclusion without limitation. The term "or," is inclusive, meaning and/or. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this document, and those of ordinary skill in the art should understand that in many, if not most instances, such definitions apply to prior, as well as future uses of such defined words and phrases.

Other aspects, advantages, and salient features of the disclosure will become apparent to those skilled in the art from the following detailed description, which, taken in conjunction with the annexed drawings, discloses various embodiments of the disclosure.

### Mode for the Invention

The following description with reference to the accompanying drawings is provided to assist in a comprehensive understating of various embodiments of the disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

When a user is capturing a video, the user may desire to capture the video in slow motion. Existing methods for capturing a video in slow motion require capturing the video at high frames per second (fps). However, capturing the video in slow motion at high fps minimizes the resolution of the video due to limitations of image sensors to operate at high fps for full frame capture. Hence the video captured in slow motion will be of low quality. Additionally, if the memory or bandwidth of the image sensors is limited, the resolution of multimedia is generally further reduced in order to capture additional frames.

Existing methods and systems, which use currently available sensors, may not be capable of capturing frames with full resolution at desired frame rates of 240fps, 360fps, 480fps, 720fps, and higher, and thus, multimedia needs to be sub-sampled, which in turn may degrade the quality of the captured video.

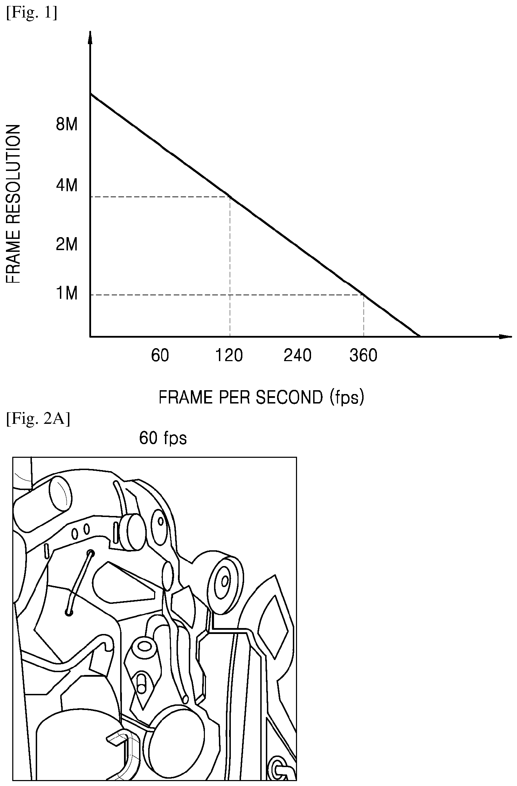

FIG. 1 illustrates a graph depicting a variation of a frame resolution with respect to a frame rate (fps), i.e., a number of frames per second according to an embodiment of the disclosure.

Referring to FIG. 1, when the frame rate (fps) increases, the frame resolution decreases. When the number of frames per second in multimedia increases, the size of the multimedia increases. In the case of limited memory or bandwidth an image sensor, the resolution of the multimedia is reduced in order to capture additional frames.

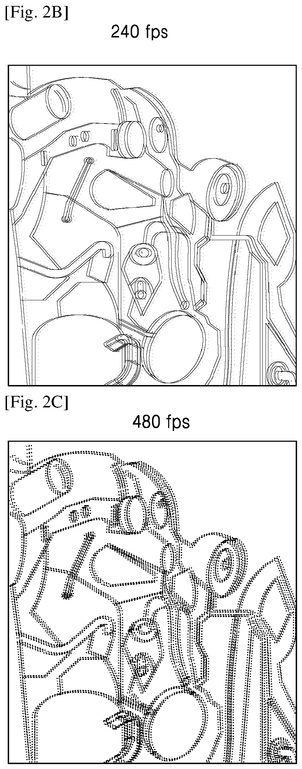

FIGS. 2A, 2B and 2C illustrate degradation of quality of an image with an increase in the frame rate according to various embodiments of the disclosure.

The frame rate of the images illustrated in FIG. 2A, FIG. 2B, and FIG. 2C are 60fps, 240fps, and 480fps, respectively. As the frame rate of the image is increased, the quality of the image decreases. This is due to the fact the resolution of the image needs to be reduced in order to capture the image at higher frame rates. When the frame rate of the image is 60fps (FIG. 2A), there is no sub-sampling. However, the image is sub-sampled to 1/4^{th} (FIG. 2B) and 1/6^{th} (FIG. 2C) when captured at 240fps and 480fps, respectively. Sub-sampling is performed in order to maintain the size of the image, which increases due to the increase of the frame rate.

The disclosure provides a method of capturing and creating a slow motion video from an initial video, the slow motion video including a first region and a second region in a frame of view (screen) of an electronic device. In an embodiment of the disclosure, the method includes selecting a region of interest (ROI) in the initial video, wherein frames in the ROI are captured at a higher frame rate in comparison with full frames of the initial video. The first region comprises at least one ROI, wherein frames in the at least one ROI may be captured at a first frame rate. The second region comprises full video frames and may be captured at a second frame rate.

In an embodiment of the disclosure, the first frame rate may be higher than the second frame rate. The video frames in the selected at least one ROI may be captured by an at least one image sensor in the electronic device and the full video frames may be captured by another image sensor (excluding the at least one image sensor capturing the at least one first region) in the electronic device. In order to display a seamless content, according to an embodiment of the disclosure, a predefined number of successive video frames captured at the first frame rate are integrated with a video frame captured at the second frame rate. In an embodiment of the disclosure, the method includes combining a successive predefined number of video frames, captured at the first frame rate, with the video frame captured at the second frame rate and creating the slow motion video. Thus, the video frame captured at the second frame rate is essentially repeated and displayed with the predefined number of successive video frames captured at the first frame rate. The slow motion video comprising of the first region and the second region is then displayed.

In an embodiment of the disclosure, the method further includes performing an operation on at least one of the first region and the second region to simulate an effect on the displayed slow motion video. The operations may include blurring, removal of noise, zooming, and so on.

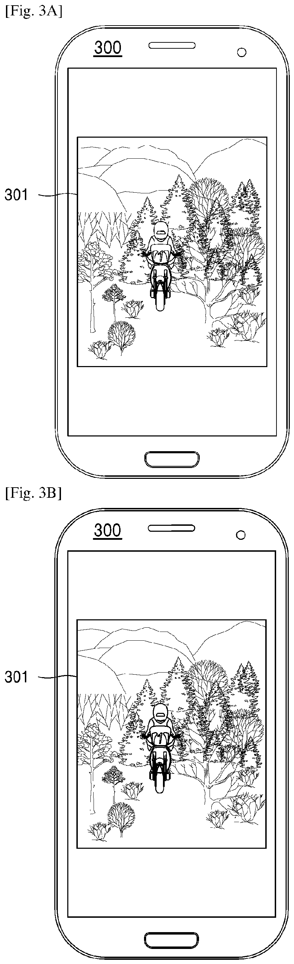

Referring now to the drawings, and more particularly to FIGS. 3A through 15, reference numerals and characters consistently denote corresponding features throughout the figures.

FIG. 3A illustrates an initial preview of a video content to be captured using an electronic device according to an embodiment of the disclosure.

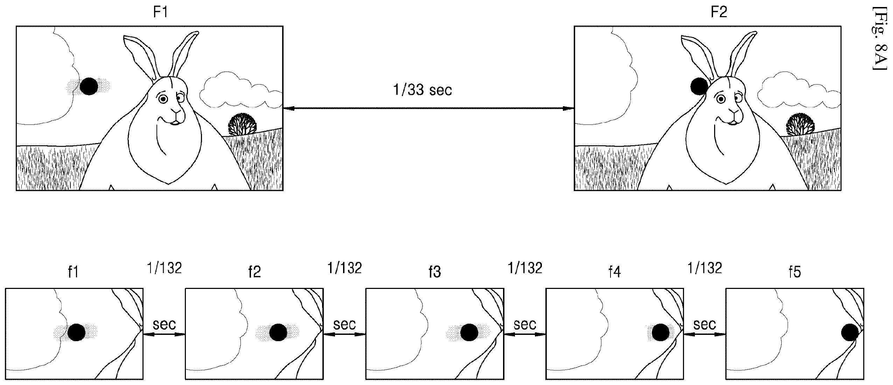

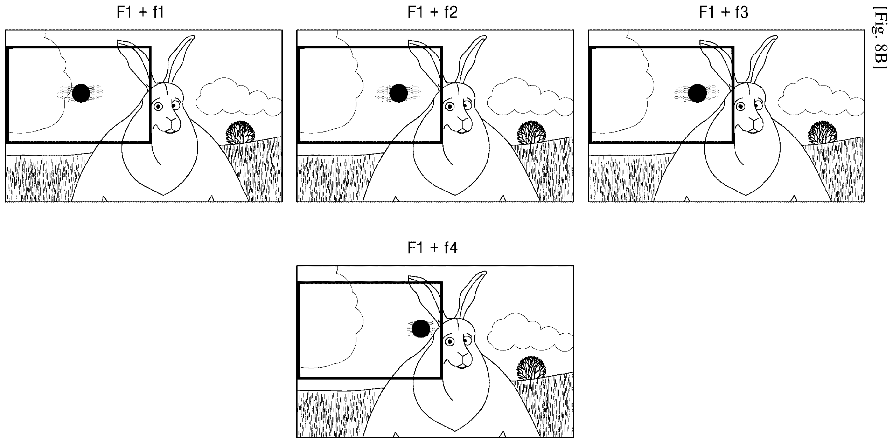

Referring to FIG. 3A, an electronic device 300 uses a method according to an embodiment of the disclosure and may be any device including at least two image sensors capable of capturing a slow motion video. The at least two image sensors may be symmetrically placed cameras. The electronic device 300 may be, but is not limited to, a mobile phone, a smartphone, a camera system, a tablet, a computer, a laptop, a wearable computing device, an Internet of Things (IoT) device, and so on. In an embodiment of the disclosure, the electronic device 300 may include two image sensors or two cameras (not shown), that is, a first image sensor and a second image sensor, or alternately a first camera and a second camera. In order to prevent degradation of quality of a video 301 to be captured, video frames in a portion of the video 301 displayed on the screen are captured at a higher frame rate in comparison with a frame rate at which full frames are captured. This aspect will be further explained with reference to FIGS. 8A and 8B.

FIG. 3B illustrates a user's selection of a ROI in a video content according to an embodiment of the disclosure.

Referring to FIG. 3B, according to an embodiment of the disclosure, a ROI 302 is selected by the user in the video 301. In an embodiment of the disclosure, the ROI 302 may be selected manually by the user. In another embodiment of the disclosure, the ROI 302 may be selected automatically. According to an embodiment of the disclosure, video frames in the ROI 302 are captured at a higher frame rate in comparison to that of the frame rate at which full frames are captured. Accordingly, degradation of the video quality is prevented since only video frames in the ROI 302 are captured at a higher frame rate.

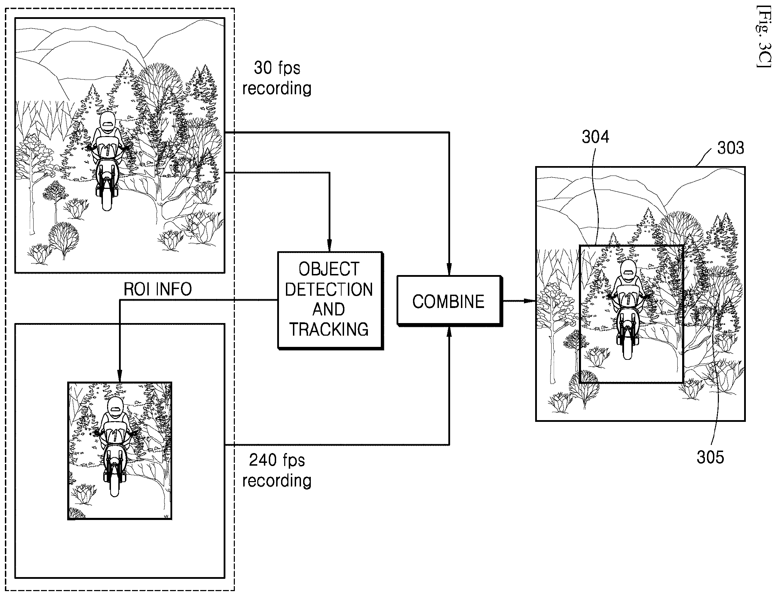

FIG. 3C illustrates an overview of a method for displaying a slow motion playback of video frames in a ROI according to an embodiment of the disclosure.

Referring to FIG. 3C, the method may include displaying a modified version of video - i.e., a slow motion video 303 - from an initial video 301. In the displaying, a region (ROI 302) of the slow motion video 303 is displayed at higher frame rate. As illustrated in the FIG. 3C, the method may include selecting the ROI 302 in the initial video 301. Thereafter, video frames in the ROI 302 may be captured using the first image sensor at a first frame rate and a first region 304 may be generated. The method may further include detecting and tracking at least one object in the ROI 302. The full frame may be captured using the second image sensor at a second frame rate and a second region 305 may be generated.

In an embodiment of the disclosure, the first frame rate may be higher than the second frame rate. In an example embodiment of the disclosure, the first frame rate, i.e., the rate at which video frames in the ROI 302 are captured, is 240fps and the second frame rate, i.e., the rate at which full video frames are captured, is 30fps. The method may further include combining the first region 304 with the second region 305 to display the slow motion video 303. Details regarding the combining will be discussed with respect to FIGS. 8A and 8B. Thus, the selected ROI 302 may be displayed at a higher frame rate in comparison with the full frame. The slow motion video 303 including the first region 304 and the second region 305 has the same quality as the initial (original) video 301 since only the first region 304 is captured at a higher frame rate.

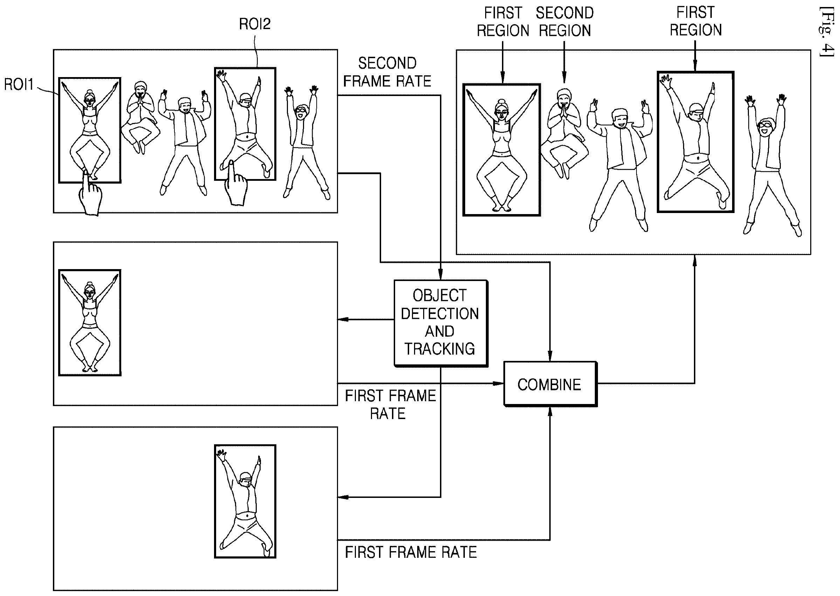

FIG. 4 illustrates selection of multiple ROIs in a video according to embodiments of the disclosure.

Referring to FIG. 4, the method includes selecting multiple ROIs in the video. In order to select multiple ROIs, multiple image sensors are required. Each image sensor captures each of the multiple ROIs. Extending the embodiment referring to FIG. 3A, 3B and 3C, each image sensor captures video frames in each of the multiple ROIs and another image sensor (excluding the multiple image sensors used for capturing the multiple ROIs) captures the full video frames.

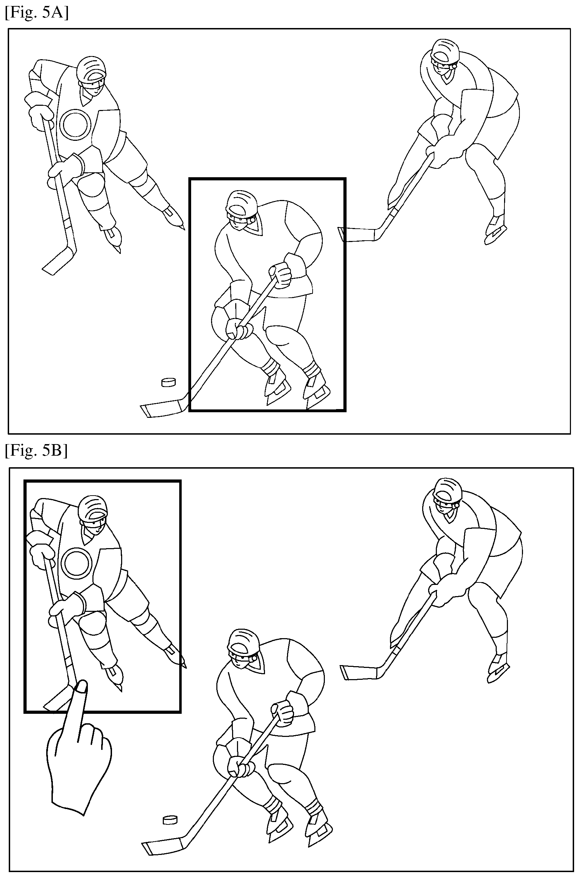

FIGS. 5A and 5B respectively illustrate automatic and manual selection of ROIs in a video according to various embodiments of the disclosure.

Referring to FIG. 5A, the ROI may be automatically selected. The electronic device 300 may prompt a user to select the ROI. When the user does not select the ROI, the ROI may be selected automatically by considering that the ROI is a region of a predefined size displayed in the center of the screen of the electronic device 300. When the ROI is automatically selected, the method may include detecting and tracking at least one object in the ROI.

Referring to FIG. 5B, the ROI may be selected by the user. Once, the ROI is selected automatically or by the user, the method may further include detecting an at least one object. Once the at least one object is detected, the method may include tracking the at least one object in the selected ROI.

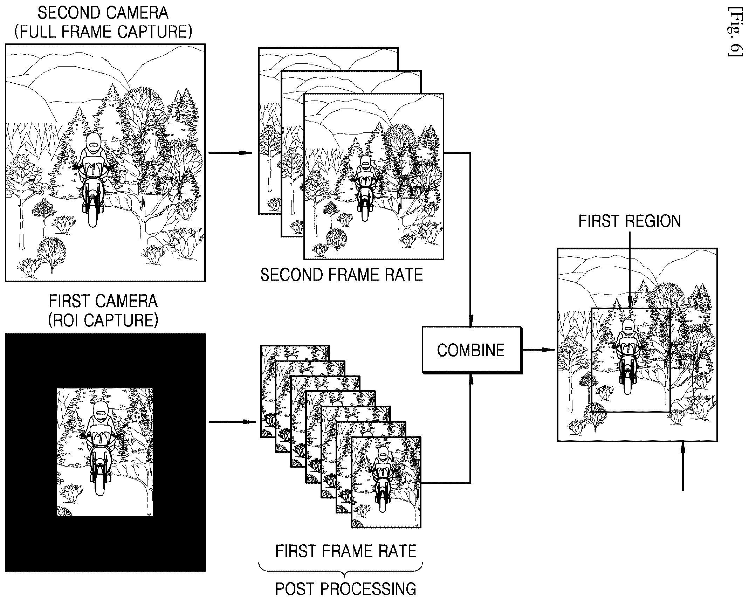

FIG. 6 illustrates display of a slow motion playback of a video, with video frames in a ROI captured at a first frame rate and full video frames of a video captured at a second frame rate according to an embodiment of the disclosure.

Referring to FIG. 6, once the ROI in the video is selected, video frames in the ROI are captured at the first frame rate and the full video frames are captured at the second frame rate. As illustrated in FIG. 6, the first frame rate is higher than the second frame rate. In an example embodiment of the disclosure, when the first frame rate is 30fps, the second frame rate may be 120fps, 480 fps, and so on.

While recording or prior to recording the video, the user may be allowed to select at least one ROI in the video frame. A first region may be obtained as the video frames are captured in the ROI at a first frame rate, and a second region may be obtained as the full video frames are captured at a second frame rate. Since the ROI frames are captured at the first frame rate (which may be higher than the second frame rate), the method of the disclosure allows performing multi-frame post-processing operations on the video frames in the ROI and the full frames, such as de-noising, zooming, blurring, and so on. The first region and the second region may be combined with each other and a video may be generated. The generated video may be a slow motion playback of the video frames captured in the ROI and may have a predefined video resolution based on user input. In an example embodiment of the disclosure, the slow motion playback of the video frames captured in the ROI is displayed with the highest possible video resolution of the electronic device 300.

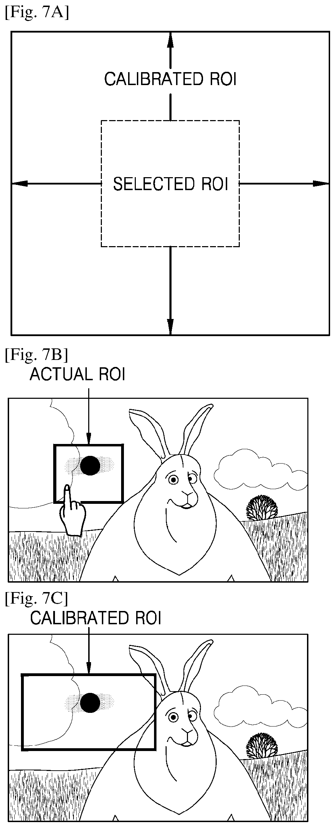

FIG. 7A illustrates calibration of an area of a selected ROI according to embodiments of the disclosure.

Referring to FIG. 7A, the method includes calibrating the area of the ROI initially selected, whether automatically or manually. When an at least one object is detected in the ROI, the method may include tracking the object. The calibration of the ROI allows tracking the at least one object in an event the at least one object moves out the area of the initially selected ROI. The ROI coordinates are updated for tracking the at least one object.

FIG. 7B illustrates a selection of an ROI by a user according to an embodiment of the disclosure.

Referring to FIG. 7B, the ROI selection is performed manually.

FIG. 7C illustrates calibration of a ROI (FIG. 7B) selected by a user according to an embodiment of the disclosure.

Referring to FIG. 7A, when the ROI is manually selected, the method may include detecting at least one object in the ROI. As illustrated in FIG. 7C, a ball (object) is detected in the ROI. Thereafter, the method may include tracking the ball. The area of the ROI is calibrated (extended) to a predetermined region or in accordance with the size of the detected object inside the ROI in order to ensure that the ball remains within the ROI (the ball is continuously tracked) in case that the first frame rate (a rate at which frames are captured in the ROI) is not sufficient to seamlessly display the trajectory of the ball in slow motion.

FIG. 8A illustrates integrating captured frames in a ROI with captured full frames according to an embodiment of the disclosure.

Referring to FIG. 8A, it is considered that the first frame rate (a rate at which video frames in the selected ROI are captured) is 132fps and the second frame rate (a rate at which full video frames are captured) is 33fps. Thus, the first frame rate is four times higher than the second frame rate. Thus, a predefined number of successive video frames of the first region (ROI), which are displayed along with a video frame of the second region (full frame), is 4. Thus, the video frame of the second region needs to be repeated four times in order to combine the video frames of the first region with the video frames of the second region.

Frames 'F1' and 'F2' are full frames and are captured at the second frame rate. The content of the frames 'F1' and 'F2' displayed at a time difference of 1/33 sec is the second region. Frames 'f1', 'f2', 'f3', 'f4', and 'f5' are captured in the ROI at the first frame rate. The content of the frames 'f1', 'f2', 'f3' and 'f4', with the latter displayed successively to the former at a time difference of 1/132sec, is the first region. The first region integrated with the second region constitutes the created slow motion video.

FIG. 8B illustrates of integrating captured frames in the ROI (FIG. 8A) with the captured full frames (FIG. 8A), according to an embodiment of the disclosure.

Referring to FIG. 8B, frames 'F1+f1', 'F1+f2', 'F1+f3' and 'F1+f4' constitute frames of the created slow motion video. The frames of the created slow motion video are obtained by integrating (or combining) at a particular time instant frames captured at the first frame rate and the second frame rate. Once the ROI is selected, the frame 'f1' may be captured by a first image sensor and the frame 'F1' may be captured by a second image sensor. The content of the frame 'f1' is the ROI. The first device thereafter continues to capture the frames 'f2', 'f3', and 'f4', while the second image sensor remains still. While the frames 'f2', 'f3', and 'f4' are being captured within a viewfinder of the electronic device 300, the method may include tracking objects in the ROI, if any, which were detected after capturing the frame f1 (the selected ROI). The frame 'F1' is displayed along with the frame 'f1' ('F1 + f1') while the frame 'f2' is captured. Thereafter, the frame 'F1' is displayed along with the frame 'f2' ('F1 + f2') while the frame 'f3' is captured. Similarly, the frames 'F1+f3' and 'F1+f4' are displayed. This continues until 1/33sec elapses and the frame 'F2' is captured by the second device. Meanwhile, the first device further captures four frames, which are integrated with the frame 'F2' and displayed.

Thus, a slow motion playback is generated, in which the frames captured in the ROI are displayed at a high frame rate without degrading the quality of the video and a seamless content is ensured by repeating each full frame with a predefined number corresponding to a number of the frames captured in the ROI, where the predefined number may be obtained based on the first frame rate and the second frame rate.

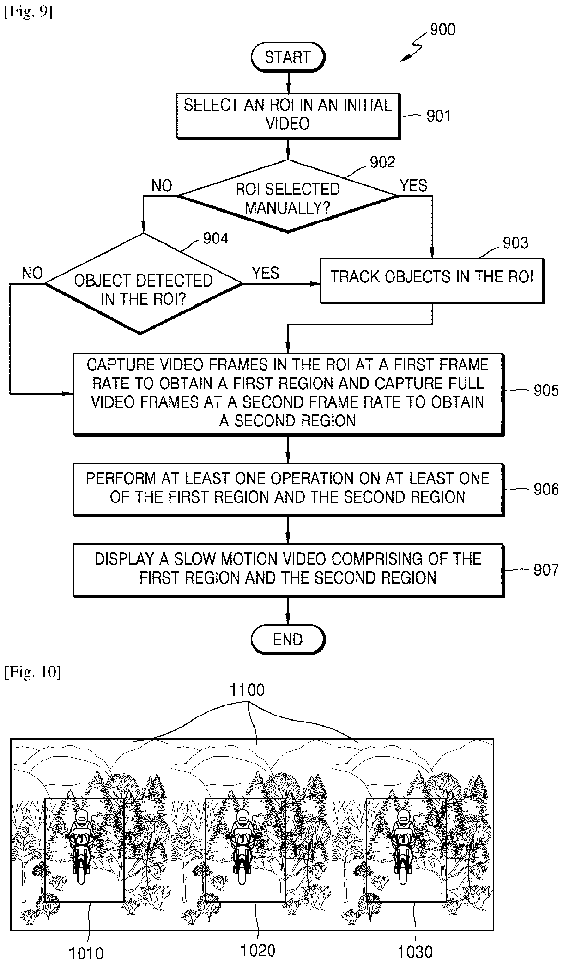

FIG. 9 illustrates a flowchart of a method for creating a slow motion video from an initial video according to an embodiment of the disclosure.

Referring to FIG. 9, a method 900 may include capturing and creating the slow motion video 303, from the initial video 301, which is displayed on the screen of the electronic device 300. The created slow motion video 303 includes a first region 304 and the second region 305, the first region 304 and the second region 305 being captured at different frame rates. The method 900 further includes viewing the at least one portion (ROI) 302 in the initial video 301 with a high-resolution and at a high frame rate without affecting the overall quality of the created slow motion video 303 displayed on the screen of the electronic device 300.

In operation 901, the method 900 includes selecting the at least one ROI 302 in the initial video 301. In operation 902, the method 900 may include detecting whether the at least one ROI 302 is selected manually.

When it is detected that the at least one ROI 302 is selected manually, the method 900 includes performing operation 903. In operation 903, the method 900 may include detecting whether an at least one object is present in the selected at least one ROI 302. When the at least one object is detected, then the method 900 includes tracking the at least one object in the at least one selected ROI 302. Thereafter, the method 900 includes performing operation 905.

On the other hand, if it is detected that the at least one ROI 302 is not selected manually, i.e., the at least one ROI 302 is selected automatically, the method 900 may include performing operation 904. In operation 904, the method 900 may include detecting whether an at least one object is present in the automatically selected at least one ROI 302. When the at least one object is detected in the automatically selected at least one ROI 302, the method 900 includes performing operation 903, which has been described above. When the at least one object is not detected, the method 900 may include performing operation 905.

In operation 905, the method 900 includes capturing video frames in the at least one ROI 302 at the first frame rate to obtain the first region 304 and capturing full video frames at the second frame rate to obtain the second region 305. The at least one ROI 302 is captured by at least one first image sensor and the full frames are captured by a second image sensor. In an embodiment of the disclosure, the first frame rate is higher than the second frame rate. The first region 304 may be displayed at a high-resolution.

Once the first region 304 and the second region 305 are obtained, the method 900 includes performing operation 906. In operation 906, the method 900 may include performing at least one operation with respect to the at least one of the first region 304 and the second region 305. The at least one operation may include a blurring operation on the second region 305 (captured full video frames), de-noising the first region 304 (video frames obtained by capturing the ROI), zooming the first region 304, and so on.

In operation 907, the method 900 may include displaying the created slow motion video 303. The created slow motion video 303 comprises the first region 304 and the second region 305. In order to display the created slow motion video 303, the first region 304 and the second region 305 are integrated or combined. The process of integrating the first region 304 and the second region 305 to display the created slow motion video 303 has been described with reference to FIGS. 8A and 8B.

The various operations in method 900 may be performed in the order presented, in a different order, or simultaneously. Further, in some embodiments of the disclosure, some of the operations listed in FIG. 9 may be omitted.

FIG. 10 illustrates a use case scenario, in which a slow motion playback of frames captured in a selected ROI in a video are displayed according to an embodiment of the disclosure.

Referring FIG. 10, the created slow motion video includes a first region (1010, 1020, and 1030) including frames captured in the selected ROI and a second region (1100) including full frames. The frames in the ROI are captured at a higher frame rate compared to the captured full frames.

In order to display a seamless content, a predefined number of frames captured in the ROI are integrated with a captured full frame. The captured full frame is displayed along with a predefined number of frames captured in the ROI. The captured full frame and the predefined number of frames captured in the ROI are combined with each other to obtain the displayed created slow motion video.

A slow motion playback of the ROI is generated in which the frames in the ROI are displayed and each captured full frame is repeated with a predefined number of times corresponding to a number of the frames captured in the ROI, based on rates at which the frames in the ROI and the full frames are captured.

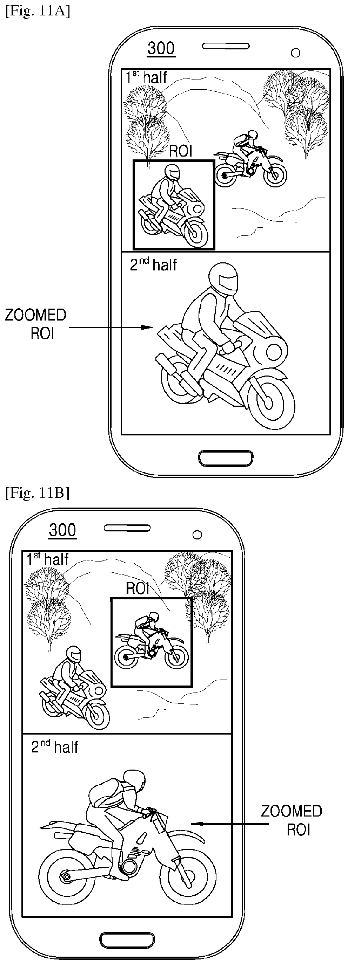

FIGS. 11A and 11B illustrate a use case scenario of simultaneously displaying a frame of a video and a zoomed version of a frame captured in a selected ROI in the video according to various embodiments as of the disclosure.

Referring to FIGS. 11A and 11B, the created slow motion video is obtained by combining a first region with a second region, in which the first region is obtained by capturing video frames in the selected ROI in the video and the second region is obtained by capturing full video frames. As illustrated in FIGS. 11A and 11B, the screen of the electronic device 300 is split into a first half and a second half. The created slow motion video is displayed on the 1^{st} half of the screen of the electronic device 300. A zoomed version of the first region is displayed on the 2^{nd} half of the screen of the electronic device 300.

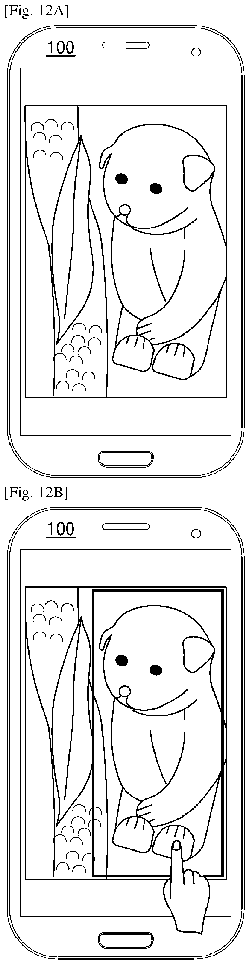

FIG. 12A illustrates an initial preview of a video to be captured using an electronic device according to an embodiment of the disclosure.

FIG. 12B illustrates selection of a ROI in a video by a user according to an embodiment of the disclosure. As illustrated in FIG. 12B, the method includes selecting the ROI in the video.

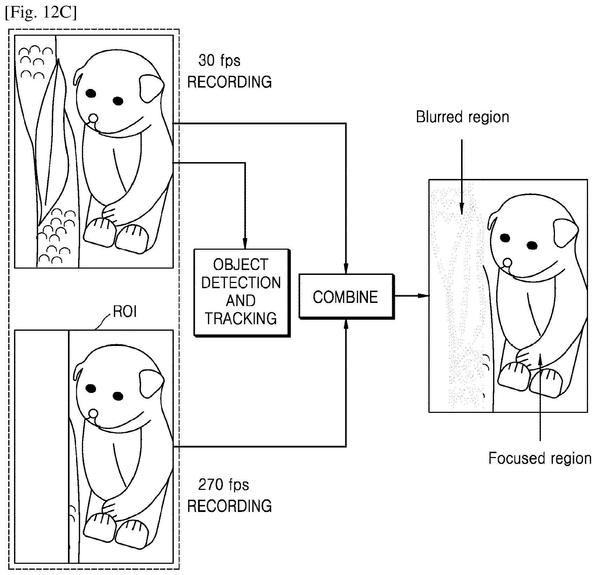

FIG. 12C illustrates display of a blurring operation performed on captured full frames of the video (FIG. 12B) and a slow motion playback of the frames captured in the selected ROI (FIG. 12B) in the video according to an embodiment of the disclosure.

Referring to FIGS. 12A, 12B, and 12C, video frames in the selected ROI are recorded at a frame rate of 270fps to generate a first region. The ROI includes an object which is detected and thereafter tracked. The full frames are recorded at a frame rate of 30fps to generate a second region.

Thereafter, the method includes combining the first region with the second region to create the video for displaying. The rate at which video frames are recorded (270fps) in the selected ROI is nine times higher than the rate at which the video frames are recorded (30fps). As such, each frame of the second region is displayed along with every nine successive frames of the first region in order to combine the first region with the second region. The created video includes the first region combined with the second region.

Thereafter, the method includes performing at least one operation on the first region. As illustrated in FIG. 12C, the method includes performing a blurring operation on the second region. The first region is the focused region. The displayed video simulates a bokeh effect, in which a slow motion playback of the first region is displayed along with the blurred second region (the full video frame). The created video including the first region and the second region has the same quality the original video since only the first region is captured at a higher frame rate.

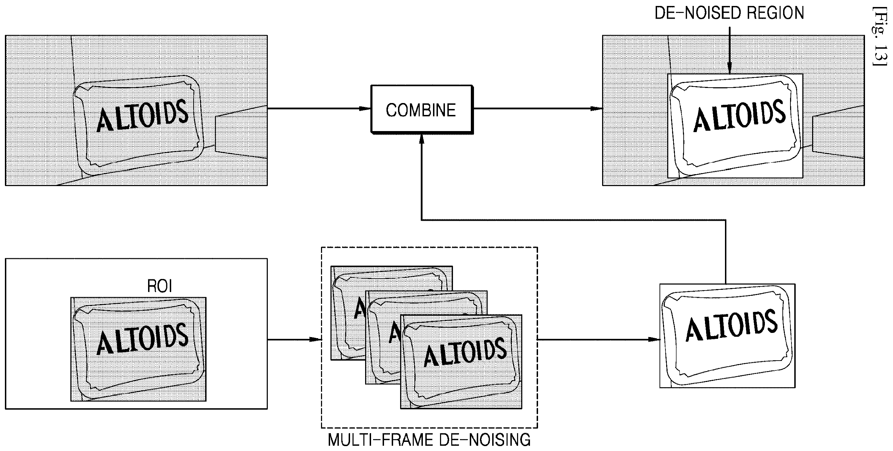

FIG. 13 illustrates removal of noise in captured frames in a selected ROI in a video while the video is being recorded according to an embodiment of the disclosure.

Referring to FIG. 13, once a video including a first region and a second region is obtained, a de-noising operation is performed on the video frames captured in the selected ROI.

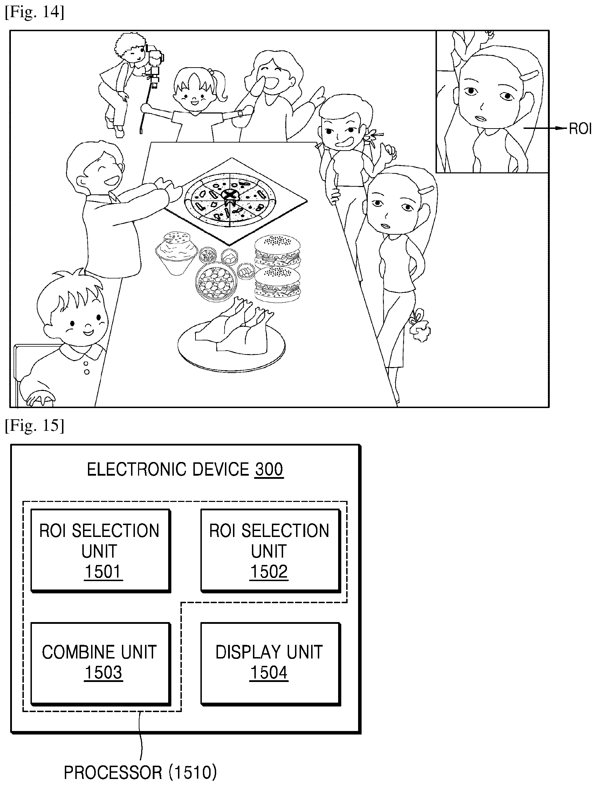

FIG. 14 illustrates display of zoomed slow motion playback of captured frames in a selected ROI in a video, along with a full frame display, according to an embodiment of the disclosure.

Referring to FIG. 14, video frames captured in the ROI and full video frames are simultaneously displayed. The video frames in may be captured independently from one another. In an embodiment of the disclosure, the created video including the video frames captured in the ROI and the full video frames are displayed as a slow motion playback, in which the video frames captured in the ROI in the video are displayed at a high-resolution.

In another embodiment of the disclosure, a zoomed version of the video frames captured in the ROI in the video may be displayed separately on a section of the screen of the electronic device 300. As illustrated in FIG. 14, the first region is separately displayed at a right-top corner of the screen as a Picture in Picture (PIP). A slow motion playback of the video frames captured in the ROI may be displayed at a right-top corner of the screen while a normal motion playback of the video frames captured in the ROI and the full video frames may be displayed in rest of the screen.

FIG. 15 illustrates various components of an electronic device that performs a method of creating slow motion media as described above according to an embodiment of the disclosure.

Referring to FIG. 15, the electronic device 300 may include a ROI selection unit 1501, a frame capture unit 1502, a combination unit 1503, and a display unit 1504. The ROI selection unit 1501, the frame capture unit 1502, and the combination unit 1503 may be implemented collectively or separately as at least one hardware processor 1510.

The ROI selection unit 1501 may select the ROI in the initial video 301. The ROI 302 may be either selected manually by a user or automatically. The ROI selection unit 1501 may prompt the user of the electronic device 300 to select the ROI 302. The ROI selection unit 1501 may wait for a predefined period to detect a command which provides the coordinates of the ROI 302 (an area of the ROI) selected by the user. When the ROI selection unit 1501 does not detect a command within the predefined period, the ROI selection unit 1501 may select the ROI 302.

In an embodiment of the disclosure, a plurality of ROIs may be selected by the ROI selection unit 1501.

The ROI selection unit 1501 may detect and track at least one object in the ROI 302. In order to track the at least one object in the ROI, the ROI selection unit 1501 may calibrate the area of the selected ROI to ensure that the at least one object remains within the area of the selected ROI 302 when the frame rate at which the frames in the ROI are captured is insufficient to track the at least one object in the at least one ROI 302.

The frame capture unit 1502 may capture frames in the ROI 302 and the full frames. The frames in the ROI 302 may be captured at the first frame rate and the full frames may be captured at the second frame rate. In an embodiment of the disclosure, the first frame rate may be higher than the second frame rate. The frame capture unit 1502 may include at least two image sensors to capture the ROI 302 and the full frames. The frame capture unit 1502 may generate the first region 304 and the second region 305. The first region 304 is obtained by capturing frames in the ROI 302 and the second region 305 is obtained by capturing the full frames.

The combination unit 1503 may combine the first region 304 with the second region 305 to generate the slow motion video 303 - i.e., a video content. When the first frame rate is higher than the second frame rate, the combination unit 1503 may integrate a predefined number of successive frames of the first region 304 with a frame of the second region 305 in order to combine the first region 304 with the second region 305. Thus, the frame of the second region 305 is repeated for generating a seamless slow motion video content. The display unit 1504 may display the created slow motion video 303 on the screen of the electronic device 300.

The aforementioned operations performed by the ROI selection unit 1501, the frame capture unit 1502, and the combination unit 1503 may be performed by one or more processors.

FIG. 15 shows components of the electronic device 300 according to an embodiment of the disclosure. However, it is to be understood that the electronic device 300 may include less or more number of elements in other embodiments. Further, the labels or names of the elements are used only for illustrative purpose and do not limit the scope of the disclosure. One or more elements may be combined together to perform same or substantially similar functions in the electronic device 300.

The embodiments disclosed herein may be implemented through at least one software program running on at least one hardware device and performing network management functions to control the network elements. The elements shown in FIG. 15 include blocks which may be a hardware device or a combination of a hardware device with a software module.

The embodiments of the disclosure describe a method and electronic device to capture and create a slow motion video and/or a video content from an initial video the slow motion video/the video content including a first region and a second region. According to the embodiments of the disclosure, video frames are captured at higher frame rates without affecting the resolution of the video and without degrading the quality of the video content. According to the embodiments of the disclosure, a high-resolution slow motion playback, bokeh effect, de-noising, zoomed display, PIP display, and the like, are obtained with regard to the created slow motion video and/or the video content. According to the embodiments of the disclosure, the ROI is captured in the initial video (to obtain the first region) at higher frame rates in comparison with frame rates used for capturing full video frames (to obtain the second region). The ROI may be either automatically selected or manually selected. Therefore, it is understood that the scope of the disclosure also covers a program code and in addition to a computer readable means having a message therein, such computer readable storage means contain program code means for implementation of one or more operations of the method, when the program code runs on a server or mobile device or any suitable programmable device. The method is implemented in an embodiment through or together with a software program written in, e.g., very high speed integrated circuit hardware description language (VHDL) another programming language, or implemented by one or more VHDL or several software modules being executed on at least one hardware device. The hardware device may be any kind of portable device that may be programmed. The device may also include means which could be e.g., hardware means like e.g., an ASIC, or a combination of hardware and software means, e.g., an ASIC and an FPGA, or at least one microprocessor and at least one memory with software modules located therein. The method of the disclosure may be implemented partly in hardware and partly in software. Alternatively, the method of the disclosure may be implemented on different hardware devices, e.g., using a plurality of CPUs.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

## Claims

1. A method of generating a video content, the method comprising:
capturing (905), by each of a plurality of first image sensors at a first frame rate, a plurality of video frames in an area of a respective one of a plurality of regions of interest, ROI, within a viewfinder of an electronic device to obtain a respective plurality of first regions;
detecting (903) a respective plurality of objects in the plurality of ROIs;
tracking said plurality of objects by calibrating the area of each said plurality of ROIs to include the respective objects based on the movements of the respective objects;
capturing (905), by a second image sensor, at a second frame rate a plurality of full video frames within the viewfinder of the electronic device to obtain a second region, wherein the first frame rate is higher than the second frame rate;
performing (906) a blurring operation on the second region to obtain blurred full video frames, and
generating (907) slow motion video content by combining the video frames of the plurality of ROIs captured by the plurality of first image sensors with the blurred full video frames within the viewfinder captured by the second image sensor, wherein the combining comprises repeating each said blurred full video frames with a predefined number corresponding to the video frames captured in each said plurality of ROIs, wherein the predefined number is based on the first frame rate and the second frame rate.

2. The method of claim 1, further comprising:
selecting (902, 904) the plurality of ROIs based on a user input when the user input is received or automatically when no user input is received.

3. The method of claim 1, wherein the repeating is performed based on a ratio of the first frame rate to the second frame rate.

4. An electronic device (300) for generating a video content, the electronic device comprising:
a plurality of first image sensors configured to capture at a first frame rate each of a plurality of video frames in an area of a respective one of a plurality of regions of interest, ROI, within a viewfinder of the electronic device to obtain a respective plurality of first regions; and
at least one processor (1510) configured to
detect (903) a respective plurality of objects in the plurality of ROIs; tracking said plurality of objects by calibrating the area of each said plurality of ROIs to include the respective objects based on the movements of the respective objects;
a second image sensor configured to capture at a second frame rate a plurality of full video frames within the viewfinder to obtain a second region, wherein the first frame rate is higher than the second frame rate;
wherein the at least one processor is further configured to perform a blurring operation on the second region to obtain blurred full video frames, and
wherein the at least one processor is configured to generate slow motion video content by combining the video frames captured by the plurality of first image sensors with the blurred full video frames captured by the second image sensor, wherein the combining comprises repeating each said blurred full video frames with a predefined number corresponding to the video frames captured in each said plurality of ROIs, wherein the predefined number is based on the first frame rate and the second frame rate.

5. The electronic device of claim 4, wherein the at least one processor (1510) is further configured to:
select the plurality of ROIs based on a received user input, or
select automatically the plurality of ROI when no user input is received.

6. The electronic device of claim 4, wherein the at least one processor (1510) is further configured to perform at least one of a de-noising operation on the plurality of first regions or a zooming operation on the plurality of first regions.

7. The electronic device of claim 4, wherein the at least one processor (1510) is further configured to:
control a display (1504) to display the video content on a first half of a screen of the electronic device (300), and
control the display to display the plurality of first regions, after performing a zooming operation on a second half of the screen of the electronic device.

## Patentansprüche

1. Verfahren zum Erzeugen eines Videoinhalts, wobei das Verfahren Folgendes umfasst:
Erfassen (905), durch jeden einer Vielzahl von ersten Bildsensoren mit einer ersten Bildrate, einer Vielzahl von Videobildern in einem Bereich eines jeweiligen einer Vielzahl von interessierenden Bereichen, ROI,
innerhalb eines Suchers eines elektronischen Geräts, um eine jeweilige Vielzahl von ersten Bereichen zu erhalten;
Erfassen (903) einer jeweiligen Vielzahl von Objekten in der Vielzahl von ROIs;
Verfolgen der Vielzahl von Objekten durch Kalibrieren der Fläche jeder der Vielzahl von ROIs, um die jeweiligen Objekte basierend auf den Bewegungen der jeweiligen Objekte einzuschließen;
Erfassen (905), durch einen zweiten Bildsensor, mit einer zweiten Bildrate einer Vielzahl von vollständigen Videobildern innerhalb des Suchers des elektronischen Geräts, um einen zweiten Bereich zu erhalten, wobei die erste Bildrate höher als die zweite Bildrate ist;
Durchführen (906) eines Unschärfevorgangs an dem zweiten Bereich, um unscharfe volle Videobilder zu erhalten, und
Erzeugen (907) von Zeitlupenvideoinhalt durch Kombinieren der Videobilder der Vielzahl von ROIs, die von der Vielzahl von ersten Bildsensoren erfasst wurden, mit den unscharfen vollständigen Videobildern innerhalb des Suchers, die von dem zweiten Bildsensor erfasst wurden,
wobei das Kombinieren das Wiederholen jedes der unscharfen vollständigen Videobilder mit einer vordefinierten Anzahl umfasst, die den Videobildern entspricht, die in jeder der Vielzahl von ROIs erfasst wurden, wobei die vordefinierte Anzahl auf der ersten Bildrate und der zweiten Bildrate basiert.

2. Verfahren nach Anspruch 1, ferner umfassend:
Auswählen (902, 904) der Vielzahl von ROIs basierend auf einer Benutzereingabe, wenn die Benutzereingabe empfangen wird, oder automatisch, wenn keine Benutzereingabe empfangen wird.

3. Verfahren nach Anspruch 1, wobei das Wiederholen basierend auf einem Verhältnis der ersten Bildrate zu der zweiten Bildrate durchgeführt wird.

4. Elektronisches Gerät (300) zum Erzeugen eines Videoinhalts, wobei das elektronische Gerät Folgendes umfasst:
eine Vielzahl von ersten Bildsensoren, die dazu konfiguriert sind, mit einer ersten Bildrate jedes einer Vielzahl von Videobildern in einem Bereich eines jeweiligen einer Vielzahl von interessierenden Bereichen, ROI, innerhalb eines Suchers des elektronischen Geräts zu erfassen, um eine jeweilige Vielzahl von ersten Bereichen zu erhalten; und
mindestens einen Prozessor (1510), der konfiguriert ist, um
eine jeweilige Vielzahl von Objekten in der Vielzahl von ROIs zu erfassen (903);
die Vielzahl von Objekten zu verfolgen, indem die Fläche jeder der Vielzahl von ROIs kalibriert wird, um die jeweiligen Objekte basierend auf den Bewegungen der jeweiligen Objekte einzuschließen;
einen zweiten Bildsensor, der konfiguriert ist, um mit einer zweiten Bildrate eine Vielzahl von vollständigen Videobildern innerhalb des Suchers zu erfassen, um einen zweiten Bereich zu erhalten, wobei die erste Bildrate höher als die zweite Bildrate ist;
wobei der mindestens eine Prozessor ferner dazu konfiguriert ist, einen Unschärfevorgang an dem zweiten Bereich durchzuführen, um unscharfe volle Videobilder zu erhalten, und
wobei der mindestens eine Prozessor dazu konfiguriert ist, Zeitlupenvideoinhalt durch Kombinieren der von der Vielzahl von ersten Bildsensoren erfassten Videobildern mit den von dem zweiten Bildsensor erfassten unscharfen vollständigen Videobildern zu erzeugen, wobei das Kombinieren das Wiederholen jedes der unscharfen vollständigen Videobilder mit einer vordefinierten Anzahl umfasst, die den Videobildern entspricht, die in jeder der mehreren ROIs erfasst wurden, wobei die vordefinierte Anzahl auf der ersten Bildrate und der zweiten Bildrate basiert.

5. Elektronisches Gerät nach Anspruch 4, wobei der mindestens eine Prozessor (1510) ferner konfiguriert ist, um:
die Vielzahl von ROIs basierend auf einer empfangenen Benutzereingabe auszuwählen, oder
automatisch die Vielzahl von ROI auszuwählen, wenn keine Benutzereingabe empfangen wird.

6. Elektronisches Gerät nach Anspruch 4, wobei der mindestens eine Prozessor (1510) ferner konfiguriert ist, um mindestens einen von einem Rauschunterdrückungsvorgang an der Vielzahl von ersten Bereichen oder einem Zoomvorgang an der Vielzahl von ersten Bereichen durchzuführen.

7. Elektronisches Gerät nach Anspruch 4, wobei der mindestens eine Prozessor (1510) ferner konfiguriert ist, um:
eine Anzeige (1504) zu steuern, um den Videoinhalt auf einer ersten Hälfte eines Bildschirms des elektronischen Geräts (300) anzuzeigen, und
die Anzeige zu steuern, um die Vielzahl von ersten Bereichen anzuzeigen, nachdem ein Zoomvorgang auf einer zweiten Hälfte des Bildschirms des elektronischen Geräts durchgeführt wurde.

## Revendications

1. Procédé de génération d'un contenu vidéo, le procédé comprenant :
la capture (905), par chacun d'une pluralité de premiers capteurs d'image à une première fréquence d'images, d'une pluralité d'images vidéo dans une zone d'une région respective d'une pluralité de régions d'intérêt, ROI, dans un viseur d'un dispositif électronique afin d'obtenir une pluralité respective de premières régions ;
la détection (903) d'une pluralité respective d'objets dans la pluralité de ROI ;
le suivi de ladite pluralité d'objets en calibrant la zone de chaque dite pluralité de ROI pour inclure les objets respectifs sur la base des mouvements des objets respectifs ;
la capture (905), par un second capteur d'image, à une seconde fréquence d'images d'une pluralité d'images vidéo complètes dans le viseur du dispositif électronique afin d'obtenir une seconde région, dans lequel la première fréquence d'images est supérieure à la seconde fréquence d'images ;
la mise en œuvre (906) d'une opération de floutage sur la seconde région afin d'obtenir des images vidéo complètes floues, et
la génération (907) d'un contenu vidéo au ralenti en combinant les images vidéo de la pluralité de ROI capturées par la pluralité de premiers capteurs d'image avec les images vidéo complètes floues dans le viseur capturées par le second capteur d'image, dans lequel la combinaison comprend la répétition de chacune desdites images vidéo complètes floues avec un nombre prédéfini correspondant aux images vidéo capturées dans chaque dite pluralité de ROI, dans lequel le nombre prédéfini est basé sur la première fréquence d'images et la seconde fréquence d'images.

2. Procédé selon la revendication 1, comprenant en outre :
la sélection (902, 904) de la pluralité de ROI sur la base d'une entrée d'utilisateur lorsque l'entrée d'utilisateur est reçue ou automatiquement lorsqu'aucune entrée d'utilisateur n'est reçue.

3. Procédé selon la revendication 1, dans lequel la répétition est mise en œuvre sur la base d'un rapport de la première fréquence d'images à la seconde fréquence d'images.

4. Dispositif électronique (300) pour la génération d'un contenu vidéo, le dispositif électronique comprenant :
une pluralité de premiers capteurs d'image configurés pour capturer à une première fréquence d'images chacune d'une pluralité d'images vidéo dans une zone d'une région respective d'une pluralité de régions d'intérêt, ROI, dans un viseur du dispositif électronique afin d'obtenir une pluralité respective des premières régions ; et
au moins un processeur (1510) configuré pour
détecter (903) une pluralité respective d'objets dans la pluralité de ROI ;
suivre ladite pluralité d'objets en calibrant la zone de chaque dite pluralité de ROI pour inclure les objets respectifs sur la base des mouvements des objets respectifs ;
un second capteur d'image configuré pour capturer à une seconde fréquence d'images une pluralité d'images vidéo complètes dans le viseur pour obtenir une seconde région, dans lequel la première fréquence d'images est supérieure à la seconde fréquence d'images ;
dans lequel l'au moins un processeur est en outre configuré pour mettre en œuvre une opération de floutage sur la seconde région afin d'obtenir des images vidéo complètes floues, et
dans lequel l'au moins un processeur est configuré pour générer un contenu vidéo au ralenti en combinant les images vidéo capturées par la pluralité de premiers capteurs d'image avec les images vidéo complètes floues capturées par le second capteur d'image, dans lequel la combinaison comprend la répétition de chacune desdites images vidéo complètes floues avec un nombre prédéfini correspondant aux images vidéo capturées dans chaque dite pluralité de ROI, dans lequel le nombre prédéfini est basé sur la première fréquence d'images et la seconde fréquence d'images.

5. Dispositif électronique selon la revendication 4, dans lequel l'au moins un processeur (1510) est en outre configuré pour :
sélectionner la pluralité de ROI sur la base d'une entrée utilisateur reçue, ou
sélectionner automatiquement la pluralité de ROI lorsqu'aucune entrée utilisateur n'est reçue.

6. Dispositif électronique selon la revendication 4, dans lequel l'au moins un processeur (1510) est en outre configuré pour mettre en œuvre au moins l'une d'une opération de débruitage sur la pluralité de premières régions ou d'une opération de zoom sur la pluralité de premières régions.

7. Dispositif électronique selon la revendication 4, dans lequel l'au moins un processeur (1510) est en outre configuré pour :
commander à un affichage (1504) d'afficher le contenu vidéo sur une première moitié d'un écran du dispositif électronique (300), et
commander à l'affichage d'afficher la pluralité de premières régions, après avoir mis en œuvre une opération de zoom sur une seconde moitié de l'écran du dispositif électronique.
